# EUROPÄISCHE PATENTSCHRIFT

(11) **EP 3 593 435 B1**
(45) Veröffentlichungstag und Bekanntmachung des Hinweises auf die Patenterteilung: **02.12.2020**
(21) Anmeldenummer: 18700203.5
(22) Anmeldetag: 09.01.2018
(51) Int. Cl.: H02J 7/00

(54) **VERFAHREN ZUM BETREIBEN EINES MODULAREN BATTERIESPEICHERSYSTEMS UND MODULARES BATTERIESPEICHERSYSTEM**
METHOD FOR OPERATING A MODULAR BATTERY STORAGE SYSTEM AND MODULAR BATTERY STORAGE SYSTEM
PROCÉDÉ DE FONCTIONNEMENT D'UN SYSTÈME D'ACCUMULATEUR MODULAIRE ET SYSTÈME D'ACCUMULATEUR MODULAIRE

(30) Priorität: 10.03.2017 EP 17160379
(43) Veröffentlichungstag der Anmeldung: 15.01.2020
(73) Patentinhaber: VARTA Microbattery GmbH, 73479 Ellwangen Jagst (DE)
(72) Erfinder: KLOOS, Dieter, 74579 Fichtenau (DE); HIRNET, Alexander, 73447 Oberkochen (DE); ELMER, Martin, 73479 Ellwangen (DE)
(74) Vertreter: Patentanwaltskanzlei Cartagena
(86) Internationale Anmeldenummer: PCT/EP2018/050466
(87) Internationale Veröffentlichungsnummer: WO 2018/162122

(56) Entgegenhaltungen:
- DE-A1-102015 205 267
- US-A1- 2011 198 936
- LEON M TOLBERT ET AL: "Multilevel Converters for Large Electric Drives", IEEE TRANSACTIONS ON INDUSTRY APPLICATIONS, IEEE SERVICE CENTER, PISCATAWAY, NJ, US, Bd. 35, Nr. 1, 1. Februar 1999 (1999-02-01), XP011022532, ISSN: 0093-9994

## Beschreibung

Die Erfindung betrifft ein Verfahren zum Betreiben eines modularen Batteriespeichersystems sowie ein Batteriespeichersystem.

Ein modulares Batteriespeichersystem umfasst eine Gruppe aus n Energiespeichermodulen, wobei n mindestens 2 ist. Die Energiespeichermodule sind wiederaufladbar ausgebildet. Innerhalb eines Batteriespeichersystems sind die Energiespeichermodule in aller Regel durch parallele und/oder serielle Verschaltung miteinander verbunden. Bei den Energiespeichermodulen kann es sich um einzelne elektrochemische Zellen handeln oder aber auch um Verbünde aus zwei oder mehr solcher Zellen. Innerhalb eines solchen Verbunds können einzelne elektrochemische Zellen wiederum durch parallele und/oder serielle Verschaltung miteinander verbunden sein.

Bei einem Batteriespeichersystem handelt es sich bekanntlich um eine Gleichstromquelle. Mit Hilfe eines Multilevel-Umrichters können Batteriespeichersysteme aber auch an ein Wechselstromnetz angeschlossen werden. Bei solchen Umrichtern werden die Spannungen einzelner Energiespeichermodule zeitversetzt für unterschiedlich lange Zeiträume addiert. Wenn die Spannungen der einzelnen Energiespeichermodule im Verhältnis zur addierten Gesamtspannung ausreichend klein sind, lassen sich z.B. sinusförmige Spannungsverläufe in guter Näherung erzeugen.

Bekanntlich werden für den sicheren Betrieb eines Batteriespeichersystems Information über die aktuelle Restkapazität (State-of-Charge, kurz: SOC) und die maximal verfügbare Kapazität (State-of-Health, kurz: SOH) der von dem Batteriespeichersystem umfassten Energiespeichermodule benötigt. Potentiell problematisch ist hierbei, dass SOC und SOH einzelner Energiespeichermodule in einem Batteriespeichersystem sehr stark divergieren können, beispielsweise in Folge von unterschiedlich schneller Alterung. In aller Regel bestimmen die Energiespeichermodule mit den schlechtesten Leistungswerten die Gesamtperformance eines Batteriespeichersystems.

Um eine optimale Funktion des Multilevel-Umrichters zu gewährleisten, sollte sichergestellt sein, dass alle mittels des Umrichters schaltbaren Energiespeichermodule möglichst wenig in ihren Leistungswerten differieren. Dies ist mit Hilfe sogenannter Balancing-Systeme, die einen Ladungs- und/oder Spannungsausgleich zwischen Energiespeichermodulen mit ungleichem Ladungs- und/oder Spannungszustand herbeiführen, möglich. Allerdings sind solche Balancing-Systeme nicht kostengünstig umzusetzen, da der damit verbundene Hard- und Softwareaufwand erheblich ist.

Aus der US 2011/198936 A1 ist ein Spannungswandler bekannt, der als ein Multi-Level-Wandler ausgebildet ist, welcher die elektrische Leistung aus Hochspannungs-Gleichstrom in einen Hochspannungs-Wechselstrom wandelt, beispielsweise für den Betrieb eines Elektromotors, der ein Fahrzeug antreibt. Der Spannungswandler stellt eine Ausgangsspannung bereit und umfasst eine Vielzahl von Wandler-Einheiten in einer Kaskadenanordnung. Die einzelnen Wandler-Einheiten umfassen jeweils mehrere Eingangsklemmen, welche mit einer Energiespeichereinheit elektrisch verbunden sind, Ausgangsklemmen, welche die Energie in eine Ausgangsspannung des Spannungswandlers einspeisen, sowie Schalterelemente, welche zwischen den Ein- und den Ausgangsklemmen angeordnet sind. Die jeweiligen Schalterelemente werden von einem Steuersignal derart angesteuert, dass eine pulsweitenmodulierte Ausgangsspannung zur Verfügung gestellt wird, wobei die Schaltspannungen jeweils in Abhängigkeit von einem der Steuersignale stehen. Die Steuereinheit ist dazu ausgebildet, einzelne Ladungszustände der Wandler-Einheiten durch z.B. die zyklische Änderung der Arbeitszyklen der einzelnen Wandler-Einheiten auszugleichen. Weiterhin kann die Steuereinheit Restkapazitäten der Wandler-Einheiten erfassen. Aus der DE 102015205267 A1) ist ein Wandlermodul für einen Mehrpegelenergiewandler bekannt, das zwei in Reihe geschaltete Wandlermodulkondensatoren umfasst. Die Wandlermodulkondensatoren müssen nicht vom gleichen Typ sein, vielmehr können sie auch durch eine Kombination unterschiedlicher Einzelkondensatoren gebildet sein.

Der Erfindung lag die Aufgabe zugrunde, eine technische Lösung bereitzustellen, die es erlaubt, unter Vermeidung oder Verringerung der genannten Probleme Batteriespeichersysteme an ein Wechselstromnetz anzuschließen.

Zur Lösung dieser Aufgabe schlägt die Erfindung ein Verfahren mit den im Folgenden beschriebenen Merkmalen vor.

Der Zweck eines erfindungsgemäßen Verfahrens liegt im Betreiben eines modularen Batteriespeichersystems, das eine Gruppe aus *n* wieder aufladbaren Energiespeichermodulen umfasst. Hierbei gilt, dass
- jedem einzelnen der *n* Energiespeichermodule ein Schalter zugeordnet ist, über den das jeweilige Energiespeichermodul aktiviert und deaktiviert werden kann, und
- die n Energiespeichermodule derart miteinander verschaltet sind, dass sich die Einzelspannungen *U_{Einzel}* aktivierter Energiespeichermodule zu einer Gesamtspannung *U_{Gesamt}* addieren können, und dass
- die Gruppe aus *n* Energiespeichermodulen Energiespeichermodule unterschiedlichen Typs umfasst.

Mögliche Konfigurationen von Energiespeichermodulen modularer Batteriespeichersysteme sind eingangs beschrieben. Die beschriebenen Konfigurationen sind auch im Rahmen des erfindungsgemäßen Verfahrens bevorzugt.

Besonders bevorzugt umfassen erfindungsgemäß einsetzbare Energiespeichermodule elektrochemische Zellen, insbesondere auf Basis von Lithium-Ionen-Technologie oder auf Basis von Nickel-Metallhydrid-Technologie. In besonderen Fällen (siehe unten) kann es aber auch zum Einsatz von Kondensatoren kommen.

Die von dem Batteriespeichersystem umfassten Energiespeichermodule können alle die gleichen Einzelspannungen *U_{Einzel}* aufweisen. Dies muss aber keineswegs immer so sein. Im Gegenteil, es kann sogar bevorzugt sein, Energiespeichermodule mit unterschiedlichen Einzelspannungen *U_{Einzel}* innerhalb des gleichen Systems zu verbauen. Dies erhöht nämlich die darstellbaren Varianten der Gesamtspannung *U_{Gesamt}.*

Die Schalter sind bevorzugt derart ausgebildet, dass die jeweils zugeordneten Energiespeichermodule auch mit umgekehrter Polarität aktiviert werden können. Auch hierdurch werden die darstellbaren Varianten der Gesamtspannung *U_{Gesamt}* erhöht, insbesondere wenn gleichzeitig Energiespeichermodule mit unterschiedlichen Einzelspannungen *U_{Einzel}* innerhalb des gleichen Systems verbaut werden. Die Einzelspannung *U_{Einzel}* eines in umgekehrter Polarität aktivierten Energiespeichermoduls leistet nämlich einen negativen Beitrag zur Gesamtspannung *U_{Gesamt}*.

Wenn eines der *n* Energiespeichermodule deaktiviert ist, so leistet es keinen Beitrag zu der Gesamtspannung *U_{Gesamt}*. In besonders bevorzugten Ausführungsformen sind die Schalter dazu ausgebildet, das jeweils zu ihnen gehörige Energiespeichermodul bei Bedarf überbrücken zu können. Überbrückte deaktivierte Energiespeichermodule sind nicht mehr elektrisch mit den weiteren Energiespeichermodulen der Gruppe verbunden.

Das erfindungsgemäße Verfahren umfasst die folgenden Schritte:
- Es wird für jedes der *n* Energiespeichermodule mindestens ein Leistungswert ermittelt.
- Es wird eine sich zeitlich ändernde Gesamtspannung *U_{Ges}(t)* erzeugt, indem mindestens zwei Energiespeichermodule aus der Gruppe zeitlich überlappend aber über unterschiedlich lange Aktivierungszeiträume aktiviert werden.
- In Abhängigkeit des ermittelten mindestens einen Leistungsparameters wird jedem der mindestens zwei Energiespeichermodule einer der unterschiedlich langen Aktivierungszeiträume zugeordnet.

Mit anderen Worten, in Abhängigkeit des mindestens einen Leistungsparameters wird also eine Zuordnung vorgenommen, welche der Energiespeichermodule nur für eine kurze Zeitdauer (einen kurzen Aktivierungszeitraum) und welche der Energiespeichermodule für eine längere Zeitdauer (einen längeren Aktivierungszeitraum) aktiviert werden.

Bei dem Leistungswert handelt es sich um einen Zustandswert, der charakteristisch für die Leistungsfähigkeit eines Energiespeichermoduls ist. Insbesondere kann es sich dabei um den aktuellen SOC oder den aktuellen SOH des jeweiligen Energiespeichermoduls zum Zeitpunkt der Ermittlung handeln. Es kann sich bei dem mindestens einen Leistungswert aber auch um einen Wert handeln, der mit dem aktuellen SOC und/oder dem aktuellen SOH des jeweiligen Energiespeichermoduls korreliert.

Zur Bestimmung des SOC existieren mehrere bekannte Vorgehensweisen. Beispielsweise kann bei Messung einer Entladespannung mit Hilfe bekannter Entladekurven auf den aktuellen SOC-Wert geschlossen werden. Im Rahmen der vorliegenden Erfindung ist die gewählte Methode zur SOC-Bestimmung jedoch sekundär. Wichtig ist lediglich, dass die ermittelten Leistungswerte miteinander vergleichbar sind, also auf vergleichbare Weise gewonnen werden, so dass anhand der Werte die Leistungsfähigkeit der Energiespeichermodule verglichen werden kann.

Auch zur Bestimmung des SOH existieren mehrere bekannte Vorgehensweisen. Charakteristisch für den SOH eines Energiespeichermoduls ist beispielsweise sein Innenwiderstand. Beispielsweise lässt sich bei Inbetriebnahme eines Energiespeichermoduls bei definierten Bedingungen (Temperatur, Ladezustand, Entladestrom, Entladedauer etc.) ein Referenzwert für den Innenwiderstand bestimmen. Anhand der Änderung des Innenwiderstands (gemessen unter den gleichen definierten Bedingungen) lässt sich auf den SOH schließen. Im Rahmen der vorliegenden Erfindung ist allerdings auch die gegebenenfalls gewählte Methode zur SOC-Bestimmung sekundär. Wichtig ist auch hier lediglich, dass die ermittelten Leistungswerte für die Energiespeichermodule des Energiespeichermoduls miteinander vergleichbar sind, also auf vergleichbare Weise gewonnen werden, so dass die Leistungsfähigkeit der Energiespeichermodule anhand der gewonnenen Werte untereinander verglichen werden kann.

In aller Regel ändert sich der SOH eines Energiespeichermoduls -abgesehen von Formierungszyklen bei Inbetriebnahme - zwischen unmittelbar aufeinanderfolgenden Lade- und Entladezyklen nicht signifikant. Wenn es sich bei dem mindestens einen Leistungswert um den aktuellen SOH handelt oder aber um einen Wert, der mit dem aktuellen SOH korreliert, so ist es daher in der Regel ausreichend, den Leistungswert nur in Intervallen, beispielsweise in Abständen von 10 Lade- und Entladezyklen, zu bestimmen. Der bestimmte Wert kann dann gespeichert werden und bis zu seiner Aktualisierung bei der Zuordnung der mindestens zwei Energiespeichermodule zu den unterschiedlich langen Aktivierungszeiträumen herangezogen werden.

Hingegen ist es in der Regel zweckmäßig, den aktuellen SOC oder aber um einen Wert, der mit dem aktuellen SOH korreliert, unmittelbar vor der Zuordnung zu bestimmen, da sich der SOC ja sehr kurzfristig in signifikantem Ausmaß ändern kann.

Die zeitlich sich ändernde Gesamtspannung *U_{Ges}(t)* kann mit grundsätzlich beliebigen Spannungsverläufen erzeugt werden. So lässt sich eine Sägezahnspannung in ebenso guter Näherung erzeugen wie eine Dreieckspannung.

Besonders bevorzugt handelt es sich bei *U_{Ges}(t)* insbesondere um eine Spannung mit sinusförmigem Spannungsverlauf, wie sie eingangs bereits Erwähnung fand. Das erfindungsgemäße Verfahren kann also in bevorzugten Ausführungsformen ein Entladeverfahren sein, bei dem Strom aus einer Gleichspannungsquelle unter Umwandlung von Gleichspannung in Wechselspannung in ein Wechselstromnetz eingespeist wird.

Ein modulares Batteriespeichersystem kann eine sehr große Anzahl an Energiespeichermodulen umfassen. In der Regel ist die Variable n ein Wert im Bereich von 2 bis 100000, bevorzugt im Bereich von 2 bis 10000, besonders bevorzugt 2 bis 1000. Innerhalb dieser Bereiche gilt weiter bevorzugt dass die Variable *n* ein Wert im Bereich von 5 bis 100, besonders bevorzugt von 5 bis 20, insbesondere von 7 bis 10, ist.

In bevorzugten Ausführungsformen weist das erfindungsgemäße Verfahren mindestens einen der folgenden zusätzlichen Schritte, besonders bevorzugt alle drei folgenden zusätzlichen Schritte, auf:
- In einem Datenspeicher werden die ermittelten Leistungswerte für jedes der *n* Energiespeichermodule abgelegt, so dass eine Sortierung der *n* Energiespeichermodule nach ihrer Leistungsfähigkeit möglich ist.
- Die Zuordnung der Energiespeichermodule zu den unterschiedlich langen Aktivierungszeiträumen erfolgt anhand der in dem Datenspeicher abgelegten Leistungswerte.
- Energiespeichermodulen mit vergleichsweise hoher Leistungsfähigkeit werden längere Aktivierungszeiträume zugeordnet als Energiespeichermodulen mit vergleichsweise geringer Leistungsfähigkeit.

In der Regel korrelieren die Aktivierungszeiträume zu den ermittelten Leistungsfähigkeiten der einzelnen Module. Wenn es sich beispielsweise bei dem mindestens einen Leistungswert um den aktuellen SOH handelt, so lassen sich die Energiespeichermodule nach steigendem SOH sortieren. Der größte SOH-Wert kennzeichnet dann die größte Leistungsfähigkeit, der kleinste SOH-Wert die geringste Leistungsfähigkeit. Erfindungsgemäß ist es bevorzugt, dass dem Energiespeichermodul mit dem größten SOH der längste Aktivierungszeitraum zugeordnet wird, dem Energiespeichermodul mit dem kleinsten SOH hingegen der kürzeste Aktivierungszeitraum.

Dies hat zur Konsequenz, dass leistungsfähigere Energiespeichermodule im Betrieb stärker belastet werden als weniger leistungsfähige. Durch die unterschiedlichen Belastungen werden die Leistungsfähigkeiten der Energiespeichermodule langfristig wieder aneinander angeglichen, da stärker belastete Module im Mittel schneller altern als schwächer belastete. Das erfindungsgemäße Verfahren sorgt damit indirekt für eine Symmetrisierung der Energiespeichermodule und hat damit einen ähnlichen Effekt wie die eingangs erwähnten Balancing-Systeme.

Die größte Kapazitätsvarianz weisen gealterte Energiespeichermodule aus der Elektromobilität auf. Auch solche gealterten Energiespeichermodule können gemäß dem vorliegend beschriebenen Verfahren problemlos gemeinsam in einem Batteriespeichersystem betrieben werden, ohne dass sie vorselektiert werden müssten. Wenn ein Energiespeichermodul sein Lebensende erreicht hat, so kann es durch ein Ersatzmodul ohne weiteres ersetzt werden, ohne dass es dabei einer aufwändigen vorbereitender Maßnahmen (Matching usw.) bedarf. Auch neuwertige Energiespeichermodule können ungeachtet ihrer Initialkapazität und einer eventuellen Produktionsstreuung ohne vorbereitende Maßnahmen verschaltet und betrieben werden.

Insgesamt verlängert sich die Nutzungsdauer der in einem erfindungsgemäß betriebenen Batteriespeichersystem eingesetzten Energiespeichermodule, was sowohl einen ökologischen als auch ökonomischem Vorteil mit sich bringt.

In besonders bevorzugten Ausführungsformen weist das erfindungsgemäße Verfahren mindestens einen der folgenden zusätzlichen Schritte, besonders bevorzugt alle fünf der im Folgenden erläuterten zusätzlichen Schritte, auf:
- Es wird ermittelt, welche Anzahl m an Energiespeichermodulen zur Erzeugung einer Scheitelspannung von *U_{Ges}(t)* benötigt wird.
- Die m Energiespeichermodule werden aus den zur Verfügung stehenden *n* Energiespeichermodulen ausgewählt.
- Um einen gewünschten Spannungsverlauf von *U_{Ges}(t)* zu erzeugen, wird festgelegt, in welchen zeitlichen Abständen und über welchen Aktivierungszeitraum die *m* Energiespeichermodule zu aktivieren sind.
- Die ausgewählten *m* Energiespeichermodule werden unter Berücksichtigung der Sortierkriterien "Leistungsfähigkeit" und "Länge der ihnen zugeordneten Aktivierungszeiträume" in eine Reihenfolge überführt, in der die beiden Sortierkriterien in gleicher Richtung entweder beide ansteigen oder beide abfallen.
   Die *m* Energiespeichermodule sind nach ihrer Leistungsfähigkeit sortierbar, die Aktivierungszeiträume nach ihrer Länge. Die Aktivierungszeiträume werden den *m* Energiespeichermodulen zugeordnet. Die Zuordnung erfolgt dabei derart, dass nach der Zuordnung eine Sortierung der Energiespeichermodule nach ihrer Leistungsfähigkeit und nach der Länge der ihnen zugeordneten Aktivierungszeiträume zum gleichen Ergebnis führt. Bei einer Sortierung nach steigender Leistungsfähigkeit ergibt sich also eine Reihenfolge, in der dem leistungsfähigsten Modul der längste Aktivierungszeitraum zugeordnet ist, dem zweitleistungsfähigsten der zweitlängste Aktivierungszeitraum, dem drittleistungsfähigsten der drittlängste Aktivierungszeitraum etc..
- Die *m* Energiespeichermodule werden in dieser Reihenfolge und in den festgelegten zeitlichen Abständen aktiviert.

Bei der Scheitelspannung handelt es sich um den größten Betrag des Augenblickswerts einer sich periodisch ändernden Spannung. Bei sinusförmigem Spannungsverlauf entspricht die Scheitelspannung der Amplitude der Sinusschwingung.

Die Ermittlung von *m* erfolgt im einfachsten Fall (wenn alle Energiespeichermodule des modularen Batteriespeichersystems die gleiche Einzelspannung U_{Einzel} aufweisen), indem der Wert der Scheitelspannung durch den Wert der Einzelspannung U_{Einzel}, die ein einzelnes Energiespeichermodul liefert, dividiert wird.

In besonders bevorzugten Ausführungsformen umfasst das modulare Batteriespeichersystem mehr Energiespeichermodule als zur Erzeugung der Scheitelspannung benötigt werden. In Kurzfassung, es gilt bevorzugt *n > m*. Die Auswahl der *m* Energiespeichermodule kann beispielsweise anhand der verfügbaren Daten zur Leistungsfähigkeit der Module erfolgen. Es können beispielsweise immer die *m* leitungsfähigsten Module ausgewählt werden.

Mit besonderem Vorteil kann es auch vorgesehen sein, dass defekte Energiespeichermodule bei der Auswahl nicht berücksichtigt werden. Hierzu kann beispielsweise für jedes der *n* Energiespeichermodule ein Leistungsschwellwert definiert werden, bei dessen Unterschreiten ein Energiespeichermodul deaktiviert wird.

Gegebenenfalls kann vorgesehen sein, dass die Deaktivierung in Folge des Unterschreitens ein Signal oder eine Mitteilung auslöst, das auf die Deaktivierung und/oder auf die Notwendigkeit eines Austauschs hinweist. Das defekte Energiespeichermodul kann grundsätzlich im laufenden Betrieb getauscht werden. Das erfindungsgemäße Verfahren muss hierfür nicht gestoppt werden. Zu diesem Zweck weisen die den Energiespeichermodulen zugeordneten Schalter die oben erwähnte Möglichkeit zur Überbrückung auf, bei der die Energiespeichermodule nicht mehr elektrisch mit weiteren Energiespeichermodulen verbunden sind.

In weiteren besonders bevorzugten Ausführungsformen weist das erfindungsgemäße Verfahren mindestens eines der folgenden zusätzlichen Merkmale und/oder einen der folgenden zusätzlichen Schritte auf:
- Der gewünschte Spannungsverlauf ist sinusförmig.
- Das Energiespeichermodul mit der höchsten Leistungsfähigkeit wird zuerst aktiviert und das mit der geringsten Leistungsfähigkeit zuletzt.
- Das Energiespeichermodul mit der höchsten Leistungsfähigkeit wird über den längsten Aktivierungszeitraum aktiviert und das Energiespeichermodul mit der geringsten Leistungsfähigkeit über den kürzesten Aktivierungszeitraum.

Zur Erzeugung einer Sinus-Halbwelle muss das Energiespeichermodul, dem der längste Aktivierungszeitraum zugeordnet wurde, als erstes aktiviert und als letztes deaktiviert werden. Hingegen muss das Energiespeichermodul, dem der kürzeste Aktivierungszeitraum zugeordnet wurde, als letztes aktiviert und als erstes deaktiviert werden. Erfindungsgemäß weist das Energiespeichermodul, dem der längste Aktivierungszeitraum zugeordnet wurde, eine vergleichsweise hohe Leistungsfähigkeit auf. Das Energiespeichermodul, dem der kürzeste Aktivierungszeitraum zugeordnet wurde, kann hingegen eine vergleichsweise niedrige Leistungsfähigkeit aufweisen.

In weiteren besonders bevorzugten Ausführungsformen weist das erfindungsgemäße Verfahren mindestens eines der folgenden zusätzlichen Merkmale auf:
- Die Gruppe aus den n Energiespeichermodulen umfasst mindestens ein Energiespeichermodul mit einer Kathode auf Basis von LFP (Lithium-Eisenphosphat).
- Die Gruppe aus den *n* Energiespeichermodulen umfasst mindestens ein Energiespeichermodul mit einer Kathode auf Basis von NMC (Lithium-Nickel-Mangan-Kobalt-Oxid).
- Die Gruppe aus den *n* Energiespeichermodulen umfasst mindestens ein Energiespeichermodul mit einer Kathode auf Basis von LTO (Lithium-Titanat).
- Die Gruppe aus den *n* Energiespeichermodulen umfasst mindestens ein Energiespeichermodul mit einer Kathode auf Basis von NCA (Lithium-Nickel-Kobalt-Aluminium-Oxid).
- Die Gruppe aus den *n* Energiespeichermodulen umfasst mindestens ein Energiespeichermodul vom Typ Pb /PbO₂.

Beim Verschalten von Energiespeichermodulen unterschiedlichen Typs können die Stärken einzelner Typen gezielt genutzt werden. Unterschiedliche Energiespeichermodule können je nach Anforderung angesteuert werden. Beispielsweise eignen sich Energiespeichermodule mit einer Kathode auf Basis von LTO zum Auffangen hoher Lastspitzen.

Grundsätzlich ist es gemäß dem beschriebenen Verfahren sogar möglich, Energiespeichermodule vom Typ Nickel-Metallhydrid und Energiespeichermodule vom Lithium-Ionen-Typ in einem Batteriespeichersystem miteinander zu verschalten.

Energiespeichermodule vom Typ Pb/PbO₂ finden mit einem Schwefelsäure-Elektrolyten klassisch als Einzelzellen eines Bleiakkumulators Verwendung. Im Rahmen der vorliegenden Erfindung kann es besonders bevorzugt sein, das mindestens eine Energiespeichermodul vom Typ Pb /PbO₂ mit Energiespeichermodulen vom Lithium-Ionen-Typ in einem Batteriespeichersystem miteinander zu verschalten. Energiespeichermodule vom Typ Pb/PbO₂ eignen sich besonders gut zur Verwendung in Scheitelspitzen.

In Übereinstimmung mit diesen Ausführungen weist das erfindungsgemäße Verfahren mindestens eines der folgenden Merkmale auf:
- Die Energiespeichermodule unterschiedlichen Typs weisen bevorzugt unterschiedliche Einzelspannungen U_{Einzel} auf.
   Die Gruppe aus n Energiespeichermodulen kann also beispielsweise Energiespeichermodule mit einer Nennspannung von 1,2 V (wie sie z.B. ein Energiespeichermodul vom Typ Nickel-Metallhydrid aufweist) kombiniert mit Energiespeichermodulen mit einer Nennspannung von 2V (z.B. ein Energiespeichermodul vom Typ Pb /PbO₂) oder mit einem Kondensator, beispielsweise mit einer Nennspannung von 4 V, umfassen.
- Die Energiespeichermodule unterschiedlichen Typs umfassen bevorzugt mindestens ein Energiespeichermodul, bei dem es sich um einen Kondensator handelt.
- Die Energiespeichermodule unterschiedlichen Typs umfassen bevorzugt mindestens zwei Energiespeichermodule mit unterschiedlichen Nennspannungen, bei denen es sich jeweils um einen Kondensator handelt.
- Die Energiespeichermodule unterschiedlichen Typs umfassen bevorzugt mindestens ein Energiespeichermodul, das elektrische Energie auf elektrochemischer Basis speichert.
- Die Energiespeichermodule unterschiedlichen Typs umfassen bevorzugt mindestens zwei Energiespeichermodule, die elektrische Energie auf elektrochemischer Basis speichern und die sich in ihrer Nennspannung voneinander unterscheiden.
- Die Energiespeichermodule unterschiedlichen Typs umfassen bevorzugt mindestens ein Energiespeichermodul, bei dem es sich um einen Kondensator handelt, und mindestens ein Energiespeichermodul, das elektrische Energie auf elektrochemischer Basis speichert, wobei der mindesten eine Kondensator und das mindestens eine Energiespeichermodul, das elektrische Energie auf elektrochemischer Basis speichert, unterschiedliche Nennspannungen aufweisen.
- Die Energiespeichermodule unterschiedlichen Typs umfassen bevorzugt ein Energiespeichermodul aus der Gruppe mit Energiespeichermodul vom Lithium-Ionen-Typ, Energiespeichermodul vom Typ Nickel-Metallhydrid und Energiespeichermodul vom Typ Pb /PbO₂.
- Die Energiespeichermodule unterschiedlichen Typs umfassen bevorzugt mindestens zwei Energiespeichermodule aus der Gruppe mit Energiespeichermodul vom Lithium-Ionen-Typ, Energiespeichermodul vom Typ Nickel-Metallhydrid und Energiespeichermodul vom Typ Pb /PbO₂.
   Die Gruppe aus *n* Energiespeichermodulen umfasst also beispielsweise mindestens ein Energiespeichermodul vom Typ Nickel-Metallhydrid mit einer Nennspannung von 1,2 V kombiniert mit mindestens einem Energiespeichermodul vom Typ Pb /PbO₂ mit einer Nennspannung von 2V oder kombiniert mit mindestens einem Energiespeichermodul vom Lithium-Ionen-Typ. Alternativ kann die Gruppe aus *n* Energiespeichermodulen auch mindestens ein Energiespeichermodul von jedem der drei genannten Typen aufweisen oder aber mindestens ein Energiespeichermodul vom Typ Pb /PbO₂ kombiniert mit mindestens einem Energiespeichermodul vom Lithium-Ionen-Typ.
- Die Energiespeichermodule unterschiedlichen Typs umfassen mindestens ein Energiespeichermodul aus der Gruppe mit Energiespeichermodul mit einer Kathode auf Basis von LFP, Energiespeichermodul mit einer Kathode auf Basis von NMC, Energiespeichermodul mit einer Kathode auf Basis von LTO und Energiespeichermodul mit einer Kathode auf Basis von NCA.

In weiteren besonders bevorzugten Ausführungsformen weist das erfindungsgemäße Verfahren mindestens eines der folgenden zusätzlichen Merkmale und/oder einen der folgenden zusätzlichen Schritte auf:
- Mindestens einer der den n Energiespeichermodulen zugeordneten Schalter ist dazu ausgebildet, eine Pulswellenmodulation (PWM) erzeugen zu können.
- Bei dem Energiespeichermodul, dem dieser Schalter zugeordnet ist, handelt es sich um einen Kondensator oder um eine Zelle vom Lithium-Ionen-Typ.
- Beim Aktivieren und/oder Deaktivieren von Energiespeichermodulen wird mittels des zur PWM-Erzeugung ausgebildeten Schalters eine PWM erzeugt, um den Übergang zwischen einzelnen Spannungsstufen abzufedern.

Für Batteriespeichersysteme in dieser Ausführungsform ist eine elektromagnetische Verträglichkeit (EMV) einfacher zu realisieren.

Erfindungsgemäß können zwei oder mehr der den n Energiespeichermodulen zugeordneten Schalter dazu ausgebildet sein, eine Pulswellenmodulation (PWM) erzeugen zu können. Zur Realisierung der beschriebenen Ausführungsform benötigt es aber grundsätzlich lediglich eines zur PWM-Erzeugung ausgebildeten Schalters. Dies ist insoweit vorteilhaft, als alle weiteren Schalter langsamer und kostengünstiger ausgelegt sein können. Es ist dann möglich, den zur PWM-Erzeugung ausgebildeten Schalter über ein vergleichsweise schnelles Bussystem separat anzusteuern während zur Ansteuerung der übrigen Schalter ein vergleichsweise langsames, gemeinsames Bussystem genutzt wird. Die Ansteuerung und der Aufbau des Batteriespeichersystems können somit sehr einfach gehalten werden.

Von der Erfindung ist auch ein modulares Batteriespeichersystem gemäß Anspruch 8 mit im Folgenden beschriebenen Merkmalen umfasst.

Das erfindungsgemäße Batteriespeichersystem umfasst eine Gruppe aus n wieder aufladbaren Energiespeichermodulen und ein Batteriemanagementsystem. Besonders bevorzugt ist es ausgebildet, wie es im Rahmen der obigen Erläuterung des erfindungsgemäßen Verfahrens beschrieben wird. Das Batteriemanagementsystem zeichnet sich durch die folgenden Merkmale aus:
- Das Batteriemanagementsystem umfasst für jedes einzelne der n Energiespeichermodule einen Schalter, über den das jeweilige Energiespeichermodul aktiviert und deaktiviert werden kann.
- Die Schalter sind derart ausgebildet und miteinander verbunden, dass sich die Einzelspannungen *U_{Einzel}* aktivierter Energiespeichermodule zu einer Gesamtspannung *U_{Gesamt}* addieren können.
- Das Batteriemanagementsystem umfasst eine Prüfeinrichtung, mittels der sich für jedes der n Energiespeichermodule mindestens ein Leistungswert ermitteln lässt, der charakteristisch für seine Leistungsfähigkeit ist.
- Das Batteriemanagementsystem umfasst eine Steuereinrichtung, mittels der sich mindestens zwei der Energiespeichermodule aus der Gruppe aus den n wieder aufladbaren Energiespeichermodulen über die jeweils zugeordneten Schalter zeitlich überlappend aber über unterschiedlich lange Aktivierungszeiträume aktivieren lassen, um eine sich zeitlich ändernde Gesamtspannung *U_{Ges}(t)* zu erzeugen.
- Die Steuereinrichtung ist dazu ausgebildet, jedem der mindestens zwei Energiespeichermodule in Abhängigkeit des ermittelten mindestens einen Leistungswerts einer der unterschiedlich langen Aktivierungszeiträume zuzuordnen.

In Übereinstimmung mit den obigen Ausführungen zum erfindungsgemäßen Verfahren weist das Batteriemanagementsystem bevorzugt mindestens eines der folgenden zusätzlichen Merkmale auf:
- Es umfasst einen Datenspeicher, in dem die ermittelten Leistungswerte für jedes der n Energiespeichermodule abgelegt werden können, so dass eine Sortierung der n Energiespeichermodule nach ihrer Leistungsfähigkeit möglich ist.
- Die Steuereinrichtung ist dazu ausgebildet, die Zuordnung der Energiespeichermodule zu den unterschiedlich langen Aktivierungszeiträumen anhand der in dem Datenspeicher abgelegten Leistungswerte vorzunehmen.

Ebenfalls in Übereinstimmung mit den obigen Ausführungen zum erfindungsgemäßen Verfahren weist das Batteriemanagementsystem besonders bevorzugt mindestens eines der folgenden zusätzlichen Merkmale auf:
- Die Steuereinrichtung ist dazu ausgebildet, automatisiert zu ermitteln, welche Anzahl *m* an Energiespeichermodulen zur Erzeugung einer Scheitelspannung von *U_{Ges}(t)* benötigt wird.
- Die Steuereinrichtung ist dazu ausgebildet, automatisiert die *m* Energiespeichermodule aus den zur Verfügung stehenden *n* Energiespeichermodulen auszuwählen.
- Das Batteriemanagementsystem umfasst einen Datenspeicher, in dem abgelegt werden kann, in welchen zeitlichen Abständen und über welchen Aktivierungszeitraum die *m* Energiespeichermodule zu aktivieren sind.
- Die Steuereinrichtung ist dazu ausgebildet, automatisiert die ausgewählten *m* Energiespeichermodule unter Berücksichtigung der Sortierkriterien "Leistungsfähigkeit" und "Länge der ihnen zugeordneten Aktivierungszeiträume" in eine Reihenfolge zu überführen, in der die beiden Sortierkriterien in gleicher Richtung entweder beide ansteigen oder beide abfallen.
- Die Steuereinrichtung ist dazu ausgebildet, die m Energiespeichermodule in dieser Reihenfolge und in den festgelegten zeitlichen Abständen zu aktivieren.

Besonders bevorzugt zeichnet sich das Batteriemanagementsystem zusätzlich durch mindestens eines der folgenden Merkmale aus:
- Mindestens einer der den *n* Energiespeichermodulen zugeordneten Schalter ist dazu ausgebildet, eine Pulswellenmodulation (PWM) erzeugen zu können.
- Die Steuereinrichtung ist dazu ausgebildet, beim Aktivieren und/oder Deaktivieren von Energiespeichermodulen mittels des zur PWM-Erzeugung ausgebildeten Schalters eine PWM zu erzeugen, um den Übergang zwischen einzelnen Spannungsstufen abzufedern.

Weitere mögliche bevorzugte Ausführungsformen des Batteriemanagementsystems lassen sich den obigen Ausführungen zum erfindungsgemäßen Verfahren entnehmen.

Bei den Energiespeichermodulen des Batteriespeichersystems handelt es sich bevorzugt um solche, die bereits im Zusammenhang mit dem erfindungsgemäßen Verfahren beschrieben wurden, wobei die Gruppe aus den *n* Energiespeichermodulen ausschließlich Energiespeichermodule vom Lithium-Ionen-Typ umfassen kann.

Das Batteriespeichersystem ist bevorzugt dazu ausgebildet, gemäß dem oben beschriebenen erfindungsgemäßen Verfahren betrieben zu werden.

Besonders bevorzugt weist das erfindungsgemäße Batteriespeichersystem mindestens eines der folgenden zusätzlichen Merkmale auf:
- Die Gruppe aus den *n* Energiespeichermodulen umfasst mindestens ein Energiespeichermodul mit einer Kathode auf Basis von LFP (Lithium-Eisenphosphat).
- Die Gruppe aus den *n* Energiespeichermodulen umfasst mindestens ein Energiespeichermodul mit einer Kathode auf Basis von NMC (Lithium-Nickel-Mangan-Kobalt-Oxid).
- Die Gruppe aus den *n* Energiespeichermodulen umfasst mindestens ein Energiespeichermodul mit einer Kathode auf Basis von LTO (Lithium-Titanat).
- Die Gruppe aus den *n* Energiespeichermodulen umfasst mindestens ein Energiespeichermodul mit einer Kathode auf Basis von NCA (Lithium-Nickel-Kobalt-Aluminium-Oxid).
- Die Gruppe aus den *n* Energiespeichermodulen umfasst mindestens ein Energiespeichermodul vom Typ Pb /PbO₂.

In Übereinstimmung mit diesen Ausführungen weist das erfindungsgemäße modulare Batteriespeichersystem besonders bevorzugt mindestens eines der folgenden Merkmale auf:
- Die Energiespeichermodule unterschiedlichen Typs weisen bevorzugt unterschiedliche Einzelspannungen U_{Einzel} auf.
- Die Energiespeichermodule unterschiedlichen Typs umfassen bevorzugt mindestens ein Energiespeichermodul, bei dem es sich um einen Kondensator handelt.
- Die Energiespeichermodule unterschiedlichen Typs umfassen bevorzugt mindestens zwei Energiespeichermodule mit unterschiedlichen Nennspannungen, bei denen es sich jeweils um einen Kondensator handelt.
- Die Energiespeichermodule unterschiedlichen Typs umfassen bevorzugt mindestens ein Energiespeichermodul, das elektrische Energie auf elektrochemischer Basis speichert.
- Die Energiespeichermodule unterschiedlichen Typs umfassen bevorzugt mindestens zwei Energiespeichermodule, die elektrische Energie auf elektrochemischer Basis speichern und die sich in ihrer Nennspannung voneinander unterscheiden.
- Die Energiespeichermodule unterschiedlichen Typs umfassen bevorzugt mindestens ein Energiespeichermodul, bei dem es sich um einen Kondensator handelt, und mindestens ein Energiespeichermodul, das elektrische Energie auf elektrochemischer Basis speichert, wobei der mindesten eine Kondensator und das mindestens eine Energiespeichermodul, das elektrische Energie auf elektrochemischer Basis speichert, unterschiedliche Nennspannungen aufweisen.
- Die Energiespeichermodule unterschiedlichen Typs umfassen bevorzugt ein Energiespeichermodul aus der Gruppe mit Energiespeichermodul vom Lithium-Ionen-Typ, Energiespeichermodul vom Typ Nickel-Metallhydrid und Energiespeichermodul vom Typ Pb /PbO₂.
- Die Energiespeichermodule unterschiedlichen Typs umfassen bevorzugt mindestens zwei Energiespeichermodule aus der Gruppe mit Energiespeichermodul vom Lithium-Ionen-Typ, Energiespeichermodul vom Typ Nickel-Metallhydrid und Energiespeichermodul vom Typ Pb /PbO₂.
- Die Energiespeichermodule unterschiedlichen Typs umfassen mindestens ein Energiespeichermodul aus der Gruppe mit Energiespeichermodul mit einer Kathode auf Basis von LFP, Energiespeichermodul mit einer Kathode auf Basis von NMC, Energiespeichermodul mit einer Kathode auf Basis von LTO und Energiespeichermodul mit einer Kathode auf Basis von NCA.

Weitere mögliche bevorzugte Ausführungsformen des Batteriespeichersystems lassen sich den obigen Ausführungen zum erfindungsgemäßen Verfahren und zum erfindungsgemäßen Batteriemanagementsystem entnehmen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnungen. Hierbei zeigen:
- Figur 1: zur Veranschaulichung eine Schaltungskonfiguration umfassend n jeweils mit einem Schalter verbundene Energiespeichermodule (schematische Darstellung);
- Figur 2: eine durch überlappende Aktivierung von gemäß Fig. 1 verschalteten Energiespeichermodulen erzeugte sinusförmige Halbwelle (schematische Darstellung);
- Figur3: den Einsatz einer Pulsweitenmodulation in Zusammenhang mit der Erfindung.

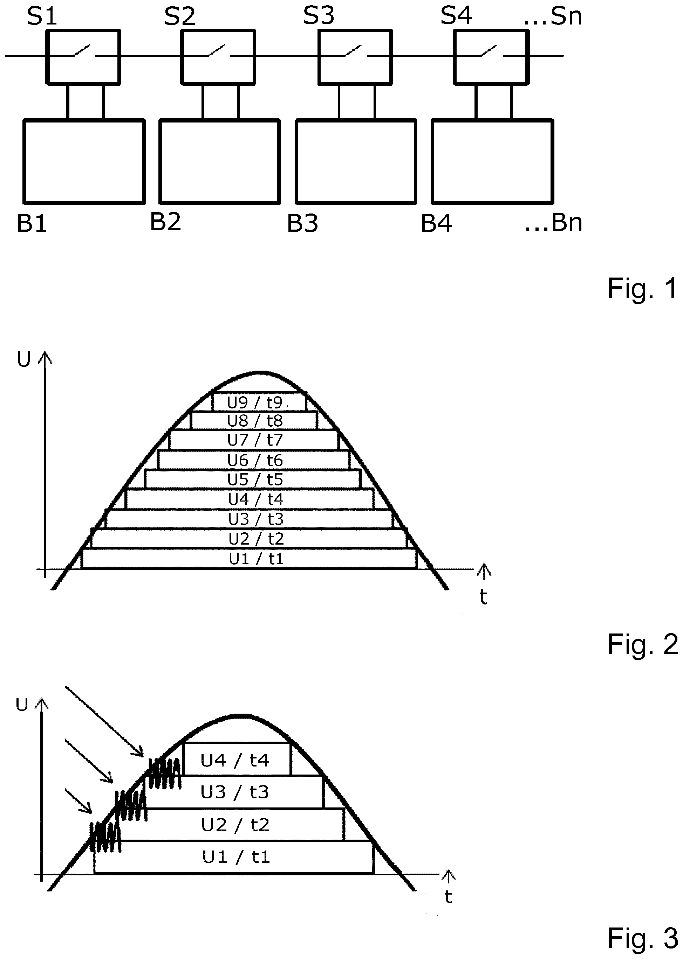

Figur 1 zeigt ein vereinfachtes Beispiel eines Batteriespeichersystems gemäß der Erfindung umfassend *n* wieder aufladbare Energiespeichermodule B1 bis Bₙ und *n* Schalter S1 bis Sₙ. Jeder der Schalter ist genau einem der Energiespeichermodule zugeordnet und umgekehrt (S1 zu B1, S2 zu B2, S3 zu B3, S4 zu B4 und Sₙ zu Bₙ). Mittels der Schalter können die jeweiligen Energiespeichermodule aktiviert und deaktiviert werden. Jeder der Schalter kann mehrere Schaltstellungen aufweisen. In einer ersten Schaltstellung ist das dem Schalter zugeordnete Energiespeichermodul aktiviert und seine Einzelspannung *U_{Einzel}* steht zur Verfügung. In einer zweiten Schaltstellung ist das dem Schalter zugeordnete Energiespeichermodul deaktiviert und seine Einzelspannung *U_{Einzel}* steht nicht zur Verfügung. In einer dritten Schaltstellung ist das dem Schalter zugeordnete Energiespeichermodul mit umgekehrter Polarität aktiviert. Alle Schalter sind dazu ausgebildet, die jeweils zu ihnen gehörigen Energiespeichermodule im Deaktivierungsfall (in der zweiten Schaltstellung) überbrücken zu können. Deaktivierte Energiespeichermodule können somit im laufenden Betrieb ausgetauscht werden.

Die Schalter sind ihrerseits in Serie geschaltet. Über die Schalter können die n Energiespeichermodule derart miteinander verschaltet werden, dass sich die Einzelspannungen *U_{Einzel}* aktivierter Energiespeichermodule zu einer Gesamtspannung *U_{Gesamt}* addieren. Befindet sich einer der Schalter in der zweiten Schaltstellung, so überbrückt er das ihm zugeordnete deaktivierte Energiespeichermodul. Befindet sich einer der Schalter in der dritten Schaltstellung, so leistet die Einzelspannung *U_{Einzel}* des ihm zugeordneten Energiespeichermoduls einen negativen Beitragzur Gesamtspannung *U_{Gesamt}*.

Durch sukzessive serielle Verschaltung der *n* Energiespeichermodule kann die Gesamtspannung *U_{Gesamt}* stufenweise erhöht werden. Die folgende Tabelle zeigt Möglichkeiten, mit Hilfe von vier Energiespeichermodulen mit unterschiedlichen Einzelspannungen *U_{Einzel}* und den dazugehörigen Schaltern 1 bis 4 eine Reihe von Gesamtspannungen *U_{Gesamt}* zu erzeugen. Der Zustand des Überbrückens eines Energiespeichermoduls ist in der Tabelle mit der Ziffer 0 angegeben, ein mit regulärer Polarität aktiviertes Energiespeichermodul mit der Ziffer 1:

| Schalter-Nr. / Einzelspannung | S1 / 50 V | S2 / 40V | S3 / 48V | S4 / 54V | U_{Gesamt} |
|---|---|---|---|---|---|
| | 0 | 0 | 0 | 0 | 0 V |
| | 1 | 0 | 0 | 0 | 50 V |
| | 1 | 1 | 0 | 0 | 90 V |
| | 1 | 0 | 1 | 0 | 98 V |
| | 1 | 0 | 0 | 1 | 104 V |
| | 0 | 1 | 1 | 0 | 88 V |

Anhand von Figur 2 wird die Funktionsweise des von der Erfindung vorgeschlagenen Verfahrens erläutert. Dargestellt ist eine durch überlappende Aktivierung von gemäß Fig. 1 verschalteten Energiespeichermodulen erzeugte näherungsweise sinusförmige Halbwelle. Vereinfachend wird davon ausgegangen, dass jedes der Energiespeichermodule die gleiche Einzelspannung *U_{Einzel}* liefert, wobei dies, wie oben klargestellt ist, keineswegs zwingend so sein muss. Zur Erzeugung der Halbwelle werden 9 Energiespeichermodule B1 bis B9 seriell miteinander verschaltet, wobei
- B1 die Einzelspannung U1 über den Aktivierungszeitraum t1 liefert,
- B2 die Einzelspannung U2 über den Aktivierungszeitraum t2 liefert,
- B3 die Einzelspannung U3 über den Aktivierungszeitraum t3 liefert,
- B4 die Einzelspannung U4 über den Aktivierungszeitraum t4 liefert,
- B5 die Einzelspannung U5 über den Aktivierungszeitraum t5 liefert,
- B6 die Einzelspannung U6 über den Aktivierungszeitraum t6 liefert,
- B7 die Einzelspannung U7 über den Aktivierungszeitraum t7 liefert,
- B8 die Einzelspannung U8 über den Aktivierungszeitraum t8 liefert,
- B9 die Einzelspannung U9 über den Aktivierungszeitraum t9 liefert, und

U1 = U2 = U3 = U4 = U5 = U6 = U7 = U8 = U9 und
t1 > t2 und t2 > t3 und t3 > t4 und t4 > t5 und t5 > t6 und t6 > t7 und t7 > t8 und t8 > t9.

Die Energiespeichermodule B1 bis B9 werden zeitversetzt in der Reihe ihrer Nummerierung aktiviert und in umgekehrter Reihenfolge zeitversetzt deaktiviert. Beim Aktivieren erhöht sich die Gesamtspannung *U_{Gesamt}* stufenweise bis der gewünschte Scheitelwert erreicht ist, danach wird die Gesamtspannung stufenweise abgesenkt. Die Form der Sinuskurve ergibt sich - abgesehen vom Scheitelwert - aus den zeitlichen Abständen, in denen die Energiespeichermodule aktiviert und deaktiviert werden und aus den jeweiligen Aktivierungszeiträumen (die Zeiträume zwischen Aktivierung und Deaktivierung eines Energiespeichermoduls). Um eine gewünschte Sinusform zu erzeugen, wird also festgelegt, in welchen zeitlichen Abständen und über welchen Aktivierungszeitraum die m Energiespeichermodule zu aktivieren sind.

Gemäß bevorzugten Ausführungsformen der vorliegenden Erfindung wird für jedes der 9 Energiespeichermodule ein Leistungswert bestimmt, der charakteristisch für sein Leistungsfähigkeit ist, beispielsweise ein Innenwiderstand, aus dem sich auf den SOH des jeweiligen Energiespeichermoduls rückschließen lässt. Die 9 Energiespeichermodule sind dann nach ihrer Leistungsfähigkeit sortierbar, die festgelegten Aktivierungszeiträume nach ihrer Länge. Die Aktivierungszeiträume werden dann den 9 Energiespeichermodulen zugeordnet. Die Zuordnung erfolgt dabei derart, dass nach der Zuordnung eine Sortierung der Energiespeichermodule nach ihrer Leistungsfähigkeit und nach der Länge der ihnen zugeordneten Aktivierungszeiträume zum gleichen Ergebnis führt. Bei einer Sortierung nach steigender Leistungsfähigkeit ergibt sich also eine Reihenfolge, in der dem leistungsfähigsten Modul der längste Aktivierungszeitraum zugeordnet ist, dem zweitleistungsfähigsten der zweitlängste Aktivierungszeitraum, dem drittleistungsfähigsten der drittlängste Aktivierungszeitraum etc..

Vorliegend bedeutet das, dass das Energiespeichermodul B1 als das mit der höchsten Leistungsfähigkeit identifiziert worden war und daher den längsten Aktivierungszeitraum zugeordnet bekam. B9 wurde als das Energiespeichermodul mit der geringsten Leistungsfähigkeit identifiziert und bekam den kürzesten Aktivierungszeitraum zugeordnet.

Bei der Erzeugung von Spannungskurven gemäß der Erfindung kann bei Übergang zwischen den Spannungsebenen, die durch Zu- oder Abschalten von Energiespeichermodulen erzeugt werden, eine Pulsweitensteuerung verwendet werden, um die Übergänge weicher zu gestalten. dies ist in Figur 4 erläutert, siehe die Pfeile an der linken Seite, die auf die Pulsweitenvorgänge hinweisen.

## Patentansprüche

1. Verfahren zum Betreiben eines modularen Batteriespeichersystems, das eine Gruppe aus *n* wieder aufladbaren Energiespeichermodulen umfasst, wobei
• jedem einzelnen der *n* Energiespeichermodule ein Schalter zugeordnet ist, über den das jeweilige Energiespeichermodul aktiviert und deaktiviert werden kann, und
• die n Energiespeichermodule über die Schalter derart miteinander verschaltbar sind, dass sich die Einzelspannungen *U_{Einzel}* aktivierter Energiespeichermodule zu einer Gesamtspannung *U_{Gesamt}* addieren können, und
• die Gruppe aus *n* Energiespeichermodulen Energiespeichermodule unterschiedlichen Typs umfasst
und das Verfahren die folgenden Schritte umfasst:
a. Es wird für jedes der *n* Energiespeichermodule mindestens ein Leistungswert ermittelt,
b. Es wird eine sich zeitlich ändernde Gesamtspannung *U_{Ges}(t)* erzeugt, indem mindestens zwei Energiespeichermodule aus der Gruppe zeitlich überlappend aber über unterschiedlich lange Aktivierungszeiträume aktiviert werden, und
c. In Abhängigkeit des ermittelten mindestens einen Leistungswerts wird jedem der mindestens zwei Energiespeichermodule einer der unterschiedlich langen Aktivierungszeiträume zugeordnet.

2. Verfahren nach Anspruch 1 mit den folgenden zusätzlichen Schritten:
a. In einem Datenspeicher werden die ermittelten Leistungswerte für jedes der n Energiespeichermodule abgelegt, so dass eine Sortierung der n Energiespeichermodule nach ihrer Leistungsfähigkeit möglich ist.
b. Die Zuordnung der Energiespeichermodule zu den unterschiedlich langen Aktivierungszeiträumen erfolgt anhand der in dem Datenspeicher abgelegten Leistungswerte.
c. Energiespeichermodulen mit vergleichsweise hoher Leistungsfähigkeit werden längere Aktivierungszeiträume zugeordnet als Energiespeichermodulen mit vergleichsweise geringer Leistungsfähigkeit.

3. Verfahren nach Anspruch 1 oder Anspruch 2 mit den folgenden zusätzlichen Schritten:
a. Es wird ermittelt, welche Anzahl *m* an Energiespeichermodulen zur Erzeugung einer Scheitelspannung von *U_{Ges}(t)* benötigt wird.
b. Die m Energiespeichermodule werden aus den zur Verfügung stehenden *n* Energiespeichermodulen ausgewählt.
c. Um einen gewünschten Spannungsverlauf von *U_{Ges}(t)* zu erzeugen, wird festgelegt, in welchen zeitlichen Abständen und über welchen Aktivierungszeitraum die m Energiespeichermodule zu aktivieren sind.
d. Die ausgewählten *m* Energiespeichermodule werden unter Berücksichtigung der Sortierkriterien "Leistungsfähigkeit" und "Länge der ihnen zugeordneten Aktivierungszeiträume" in eine Reihenfolge überführt, in der die beiden Sortierkriterien in gleicher Richtung entweder beide ansteigen oder beide abfallen.
e. Die *m* Energiespeichermodule werden in dieser Reihenfolge und in den festgelegten zeitlichen Abständen aktiviert.

4. Verfahren nach Anspruch 3 mit mindestens einem der folgenden zusätzlichen Merkmale und/oder zusätzlichen Schritte:
a. Der gewünschte Spannungsverlauf ist sinusförmig.
b. Das Energiespeichermodul mit der höchsten Leistungsfähigkeit wird zuerst aktiviert und das mit der geringsten Leistungsfähigkeit zuletzt.
c. Das Energiespeichermodul mit der höchsten Leistungsfähigkeit wird über den längsten Aktivierungszeitraum aktiviert und das Energiespeichermodul mit der geringsten Leistungsfähigkeit über den kürzesten Aktivierungszeitraum.

5. Verfahren nach Anspruch 4 mit mindestens einem der folgenden zusätzlichen Merkmale:
a. Die Energiespeichermodule unterschiedlichen Typs weisen bevorzugt unterschiedliche Einzelspannungen U_{Einzel} auf.
b. Die Energiespeichermodule unterschiedlichen Typs umfassen bevorzugt mindestens ein Energiespeichermodul, bei dem es sich um einen Kondensator handelt.
c. Die Energiespeichermodule unterschiedlichen Typs umfassen bevorzugt mindestens zwei Energiespeichermodule mit unterschiedlichen Nennspannungen, bei denen es sich jeweils um einen Kondensator handelt.
d. Die Energiespeichermodule unterschiedlichen Typs umfassen bevorzugt mindestens ein Energiespeichermodul, das elektrische Energie auf elektrochemischer Basis speichert.
e. Die Energiespeichermodule unterschiedlichen Typs umfassen bevorzugt mindestens zwei Energiespeichermodule, die elektrische Energie auf elektrochemischer Basis speichern und die sich in ihrer Nennspannung voneinander unterscheiden.
f. Die Energiespeichermodule unterschiedlichen Typs umfassen bevorzugt mindestens ein Energiespeichermodul, bei dem es sich um einen Kondensator handelt, und mindestens ein Energiespeichermodul, das elektrische Energie auf elektrochemischer Basis speichert, wobei der mindesten eine Kondensator und das mindestens eine Energiespeichermodul, das elektrische Energie auf elektrochemischer Basis speichert, unterschiedliche Nennspannungen aufweisen.
g. Die Energiespeichermodule unterschiedlichen Typs umfassen bevorzugt ein Energiespeichermodul aus der Gruppe mit Energiespeichermodul vom Lithium-Ionen-Typ, Energiespeichermodul vom Typ Nickel-Metallhydrid und Energiespeichermodul vom Typ Pb /PbO₂.
h. Die Energiespeichermodule unterschiedlichen Typs umfassen bevorzugt mindestens zwei Energiespeichermodule aus der Gruppe mit Energiespeichermodul vom Lithium-Ionen-Typ, Energiespeichermodul vom Typ Nickel-Metallhydrid und Energiespeichermodul vom Typ Pb /PbO₂.
i. Die Energiespeichermodule unterschiedlichen Typs umfassen mindestens ein Energiespeichermodul aus der Gruppe mit Energiespeichermodul mit einer Kathode auf Basis von LFP, Energiespeichermodul mit einer Kathode auf Basis von NMC, Energiespeichermodul mit einer Kathode auf Basis von LTO und Energiespeichermodul mit einer Kathode auf Basis von NCA.

6. Verfahren nach einem der vorhergehenden Ansprüche mit mindestens einem der folgenden zusätzlichen Merkmale und/oder zusätzlichen Schritte:
a. Einer der den *n* Energiespeichermodulen zugeordneten Schalter ist dazu ausgebildet, eine Pulswellenmodulation (PWM) erzeugen zu können.
b. Bei dem Energiespeichermodul, dem dieser Schalter zugeordnet ist, handelt es sich um einen Kondensator.
c. Beim Aktivieren und/oder Deaktivieren von Energiespeichermodulen wird mittels des zur PWM-Erzeugung ausgebildeten Schalters eine PWM erzeugt, um den Übergang zwischen einzelnen Spannungsstufen abzufedern.

7. Verfahren nach einem der vorhergehenden Ansprüche mit mindestens einem der folgenden zusätzlichen Merkmale und/oder zusätzlichen Schritte:
a. Es wird für jedes der *n* Energiespeichermodule ein Leistungsschwellwert definiert, bei dessen Unterschreiten ein Energiespeichermodul deaktiviert wird.
b. Bei Unterschreiten des Leistungsschwellwerts wird ein Signal oder eine Mitteilung ausgelöst, das oder die auf die Deaktivierung hinweist.
c. Das deaktivierte Energiespeichermodul wird überbrückt, so dass es nicht mehr mit weiteren Energiespeichermodulen elektrisch verbunden ist.
d. Das deaktivierte Energiespeichermodul wird ausgetauscht.

8. Modulares Batteriespeichersystem, das eine Gruppe aus *n* wieder aufladbaren Energiespeichermodulen umfasst, mit den folgenden Merkmalen:
a. die Gruppe aus *n* Energiespeichermodulen umfasst Energiespeichermodule unterschiedlichen Typs.
b. Das Batteriespeichersystem umfasst ein Batteriemanagementsystem.
c. Das Batteriemanagementsystem umfasst für jedes einzelne der *n* Energiespeichermodule einen Schalter, über den das jeweilige Energiespeichermodul aktiviert und deaktiviert werden kann,
d. die Schalter sind derart ausgebildet und miteinander verbunden, dass sich die Einzelspannungen *U_{Einzel}* aktivierter Energiespeichermodule zu einer Gesamtspannung *U_{Gesamt}* addieren können,
e. das Batteriemanagementsystem umfasst eine Prüfeinrichtung, mittels der sich für jedes der *n* Energiespeichermodule mindestens ein Leistungswert ermitteln lässt, der charakteristisch für seine Leistungsfähigkeit ist,
f. das Batteriemanagementsystem umfasst eine Steuereinrichtung, mittels der sich mindestens zwei der Energiespeichermodule aus der Gruppe über die jeweils zugeordneten Schalter zeitlich überlappend aber über unterschiedlich lange Aktivierungszeiträume aktivieren lassen, um eine sich zeitlich ändernde Gesamtspannung *U_{Ges}(t)* zu erzeugen, und
g. die Steuereinrichtung ist dazu ausgebildet, jedem der mindestens zwei Energiespeichermodule in Abhängigkeit des ermittelten mindestens einen Leistungswerts einer der unterschiedlich langen Aktivierungszeiträume zuzuordnen.

9. Batteriespeichersystem nach Anspruch 8 mit mindestens einem der folgenden zusätzlichen Merkmale:
a. Die Energiespeichermodule unterschiedlichen Typs weisen unterschiedliche Einzelspannungen U_{Einzel} auf.
b. Die Energiespeichermodule unterschiedlichen Typs umfassen mindestens ein Energiespeichermodul, bei dem es sich um einen Kondensator handelt.
c. Die Energiespeichermodule unterschiedlichen Typs umfassen mindestens zwei Energiespeichermodule mit unterschiedlichen Nennspannungen, bei denen es sich jeweils um einen Kondensator handelt.
d. Die Energiespeichermodule unterschiedlichen Typs umfassen mindestens ein Energiespeichermodul, das elektrische Energie auf elektrochemischer Basis speichert.
e. Die Energiespeichermodule unterschiedlichen Typs umfassen mindestens zwei Energiespeichermodule, die elektrische Energie auf elektrochemischer Basis speichern und die sich in ihrer Nennspannung voneinander unterscheiden.
f. Die Energiespeichermodule unterschiedlichen Typs umfassen mindestens ein Energiespeichermodul, bei dem es sich um einen Kondensator handelt, und mindestens ein Energiespeichermodul, das elektrische Energie auf elektrochemischer Basis speichert, wobei der mindesten eine Kondensator und das mindestens eine Energiespeichermodul, das elektrische Energie auf elektrochemischer Basis speichert, unterschiedliche Nennspannungen aufweisen.
g. Die Energiespeichermodule unterschiedlichen Typs umfassen ein Energiespeichermodul aus der Gruppe mit Energiespeichermodul vom Lithium-Ionen-Typ, Energiespeichermodul vom Typ Nickel-Metallhydrid und Energiespeichermodul vom Typ Pb /PbO₂.
h. Die Energiespeichermodule unterschiedlichen Typs umfassen mindestens zwei Energiespeichermodule aus der Gruppe mit Energiespeichermodul vom Lithium-Ionen-Typ, Energiespeichermodul vom Typ Nickel-Metallhydrid und Energiespeichermodul vom Typ Pb /PbO₂.
i. Die Energiespeichermodule unterschiedlichen Typs umfassen mindestens ein Energiespeichermodul aus der Gruppe mit Energiespeichermodul mit einer Kathode auf Basis von LFP, Energiespeichermodul mit einer Kathode auf Basis von NMC, Energiespeichermodul mit einer Kathode auf Basis von LTO und Energiespeichermodul mit einer Kathode auf Basis von NCA.

10. Batteriespeichersystem nach einem der Ansprüche 8 oder 9 mit mindestens einem der folgenden zusätzlichen Merkmale:
a. Es umfasst einen Datenspeicher, in dem die ermittelten Leistungswerte für jedes der n Energiespeichermodule abgelegt werden können, so dass eine Sortierung der n Energiespeichermodule nach ihrer Leistungsfähigkeit möglich ist.
b. Die Steuereinrichtung ist dazu ausgebildet, die Zuordnung der Energiespeichermodule zu den unterschiedlich langen Aktivierungszeiträumen anhand der in dem Datenspeicher abgelegten Leistungswerte vorzunehmen.

11. Batteriespeichersystem nach einem der Ansprüche 8 bis 10 mit mindestens einem der folgenden zusätzlichen Merkmale:
a. Die Steuereinrichtung ist dazu ausgebildet, automatisiert zu ermitteln, welche Anzahl m an Energiespeichermodulen zur Erzeugung einer Scheitelspannung von *U_{Ges}(t)* benötigt wird.
b. Die Steuereinrichtung ist dazu ausgebildet, automatisiert die *m* Energiespeichermodule aus den zurVerfügung stehenden *n* Energiespeichermodulen auszuwählen.
c. Das Batteriemanagementsystem umfasst einen Datenspeicher, in dem abgelegt werden kann, in welchen zeitlichen Abständen und über welchen Aktivierungszeitraum die *m* Energiespeichermodule zu aktivieren sind.
d. Die Steuereinrichtung ist dazu ausgebildet, automatisiert die ausgewählten *m* Energiespeichermodule durch Sortierung nach den Sortierkriterien "Leistungsfähigkeit" und "Länge der ihnen zugeordneten Aktivierungszeiträume" in eine Reihenfolge zu überführen, in der die beiden Sortierkriterien in gleicher Richtung entweder beide ansteigen oder beide abfallen.
e. Die Steuereinrichtung ist dazu ausgebildet, die *m* Energiespeichermodule in dieser Reihenfolge und in den festgelegten zeitlichen Abständen zu aktivieren.

12. Batteriespeichersystem nach einem der Ansprüche 8 bis 11 mit mindestens einem der folgenden zusätzlichen Merkmale:
a. Einer der den *n* Energiespeichermodulen zugeordneten Schalter ist dazu ausgebildet, eine Pulswellenmodulation (PWM) erzeugen zu können.
b. Bei dem Energiespeichermodul, dem dieser Schalter zugeordnet ist, handelt es sich um einen Kondensator.
c. Die Steuereinrichtung ist dazu ausgebildet, beim Aktivieren und/oder Deaktivieren von Energiespeichermodulen mittels des zur PWM-Erzeugung ausgebildeten Schalters eine PWM zu erzeugen, um den Übergang zwischen einzelnen Spannungsstufen abzufedern.

## Claims

1. Method for operating a modular battery storage system which comprises a group of n rechargeable energy storage modules, wherein
• a switch is assigned to each of the individual n energy storage modules, by means of which switch the respective energy storage module can be activated and deactivated, and
• the n energy storage modules can be connected to one another by means of the switches in such a way that the individual voltages *U_{individual}* of activated energy storage modules can be added up to form a total voltage *Uₜₒₜₐₗ,* and
• the group of n energy storage modules comprises energy storage modules of different types
and the method comprises the following steps:
a. At least one power value is ascertained for each of the *n* energy storage modules,
b. A total voltage *Uₜₒₜ(t)* which changes over time is produced by way of at least two energy storage modules from the group being activated with a time overlap but over activation periods of different length, and
c. One of the activation periods of different length is assigned to each of the at least two energy storage modules depending on the ascertained at least one power value.

2. Method according to Claim 1, comprising the following additional steps:
a. The ascertained power values for each of the n energy storage modules are stored in a data memory, so that it is possible to sort the n energy storage modules in accordance with their power capacity.
b. The assignment of the energy storage modules to the activation periods of different length takes place on the basis of the power values which are stored in the data memory.
c. Longer activation periods are assigned to energy storage modules with a comparatively high power capacity than energy storage modules with a comparatively low power capacity.

3. Method according to Claim 1 or Claim 2, comprising the following additional steps:
a. The number *m* of energy storage modules which is required for generating a peak voltage of *Uₜₒₜ(t)* is ascertained.
b. The m energy storage modules are selected from amongst the available n energy storage modules.
c. The time intervals in which and the activation period over which the m energy storage modules are to be activated are defined in order to generate a desired voltage profile of *Uₜₒₜ(t).*
d. The selected *m* energy storage modules are switched into an order in which the two sorting criteria either both increase or both decrease in the same direction, taking into account the sorting criteria "power capacity" and "length of the activation periods assigned to them".
e. The *m* energy storage modules are activated in this order and at the defined time intervals.

4. Method according to Claim 3, comprising at least one of the following additional features and/or additional steps:
a. The desired voltage profile is sinusoidal.
b. The energy storage module with the highest power capacity is activated first and that with the lowest power capacity is activated last.
c. The energy storage module with the highest power capacity is activated over the longest activation period and the energy storage module with the lowest power capacity is activated over the shortest activation period.

5. Method according to Claim 4, comprising at least one of the following additional features:
a. The energy storage modules of different types preferably have different individual voltages U_{individual}.
b. The energy storage modules of different types preferably comprise at least one energy storage module which is a capacitor.
c. The energy storage modules of different types preferably comprise at least two energy storage modules with different rated voltages, each of said energy storage modules being a capacitor.
d. The energy storage modules of different types preferably comprise at least one energy storage module which stores electrical energy on an electrochemical basis.
e. The energy storage modules of different types preferably comprise at least two energy storage modules which store electrical energy on an electrochemical basis and which differ from one another in respect of their rated voltage.
f. The energy storage modules of different types preferably comprise at least one energy storage module which is a capacitor and at least one energy storage module which stores electrical energy on an electrochemical basis, wherein the at least one capacitor and the at least one energy storage module which stores electrical energy on an electrochemical basis have different rated voltages.
g. The energy storage modules of different types preferably comprise an energy storage module from the group comprising an energy storage module of the lithium-ion type, an energy storage module of the nickel-metal hydride type and an energy storage module of the Pb/PbO₂ type.
h. The energy storage modules of different types preferably comprise at least two energy storage modules from the group comprising an energy storage module of the lithium-ion type, an energy storage module of the nickel-metal hydride type and an energy storage module of the Pb/PbO₂ type.
i. The energy storage modules of different types comprise at least one energy storage module from the group comprising an energy storage module with a cathode based on LFP, an energy storage module with a cathode based on NMC, an energy storage module with a cathode based on LTO and an energy storage module with a cathode based on NCA.

6. Method according to one of the preceding claims, comprising at least one of the following additional features and/or additional steps:
a. One of the switches which is assigned to the n energy storage modules is designed to be able to generate a pulse-width modulation (PWM).
b. The energy storage module to which said switch is assigned is a capacitor.
c. During activation and/or deactivation of energy storage modules, a PWM is generated by means of the switch which is designed for generating PWM in order to ease the transition between individual voltage levels.

7. Method according to one of the preceding claims, comprising at least one of the following additional features and/or additional steps:
a. A power threshold value is defined for each of the n energy storage modules, an energy storage module being deactivated when said power threshold value is undershot.
b. A signal or a message which suggests the deactivation is triggered when the power threshold value is undershot.
c. The deactivated energy storage module is bridged, so that it is no longer electrically connected to further energy storage modules.
d. The deactivated energy storage module is replaced.

8. Modular battery storage system which comprises a group of n rechargeable energy storage modules, comprising the following features:
a. the group of *n* energy storage modules comprises energy storage modules of different types.
b. The battery storage system comprises a battery management system.
c. The battery management system comprises a switch for each of the individual *n* energy storage modules, by means of which switch the respective energy storage module can be activated and deactivated,
d. the switches are designed and connected to one another in such a way that the individual voltages *U_{individual}* of activated energy storage modules can be added up to form a total voltage *Uₜₒₜₐₗ,*
e. the battery management system comprises a test device by means of which at least one power value can be ascertained for each of the *n* energy storage modules, said power value being characteristic of the power capacity of said energy storage module,
f. the battery management system comprises a control device by means of which at least two of the energy storage modules from the group can be activated with a time overlap but over activation periods of different length by means of the respectively associated switches in order to generate a total voltage *Uₜₒₜ(t)* which changes over time, and
g. the control device is designed to assign one of the activation periods of different length to each of the at least two energy storage modules depending on the ascertained at least one power value.

9. Battery storage system according to Claim 8, comprising at least one of the following additional features:
a. The energy storage modules of different types have different individual voltages U_{individual}.
b. The energy storage modules of different types comprise at least one energy storage module which is a capacitor.
c. The energy storage modules of different types comprise at least two energy storage modules with different rated voltages, each of said energy storage modules being a capacitor.
d. The energy storage modules of different types comprise at least one energy storage module which stores electrical energy on an electrochemical basis.
e. The energy storage modules of different types comprise at least two energy storage modules which store electrical energy on an electrochemical basis and which differ from one another in respect of their rated voltage.
f. The energy storage modules of different types comprise at least one energy storage module which is a capacitor and at least one energy storage module which stores electrical energy on an electrochemical basis, wherein the at least one capacitor and the at least one energy storage module which stores electrical energy on an electrochemical basis have different rated voltages.
g. The energy storage modules of different types comprise an energy storage module from the group comprising an energy storage module of the lithium-ion type, an energy storage module of the nickel-metal hydride type and an energy storage module of the Pb/PbO₂ type.
h. The energy storage modules of different types comprise at least two energy storage modules from the group comprising an energy storage module of the lithium-ion type, an energy storage module of the nickel-metal hydride type and an energy storage module of the Pb/PbO₂ type.
i. The energy storage modules of different types comprise at least one energy storage module from the group comprising an energy storage module with a cathode based on LFP, an energy storage module with a cathode based on NMC, an energy storage module with a cathode based on LTO and an energy storage module with a cathode based on NCA.

10. Battery storage system according to one of Claims 8 and 9, comprising at least one of the following additional features:
a. It comprises a data memory in which the ascertained power values for each of the *n* energy storage modules can be stored, so that it is possible to sort the *n* energy storage modules in accordance with their power capacity.
b. The control device is designed to perform the assignment of the energy storage modules to the activation periods of different length on the basis of the power values which are stored in the data memory.

11. Battery storage system according to one of Claims 8 to 10, comprising at least one of the following additional features:
a. The control device is designed to ascertain the number *m* of energy storage modules which is required for generating a peak voltage of *Uₜₒₜ(t)* in an automated manner.
b. The control device is designed to select the *m* energy storage modules from amongst the available n energy storage modules in an automated manner.
c. The battery management system comprises a data memory in which it is possible to store the time intervals in which and the activation period over which the *m* energy storage modules are to be activated.
d. The control device is designed to switch the selected *m* energy storage modules into an order in which the two sorting criteria either both increase or both decrease in the same direction by sorting, taking into account the sorting criteria "power capacity" and "length of the activation periods assigned to them", in an automated manner.
e. The control device is designed to activate the m energy storage modules in this order and at the defined time intervals.

12. Battery storage system according to one of Claims 8 to 11, comprising at least one of the following additional features:
a. One of the switches which is assigned to the n energy storage modules is designed to be able to generate a pulse-width modulation (PWM).
b. The energy storage module to which said switch is assigned is a capacitor.
c. The control device is designed to, during activation and/or deactivation of energy storage modules, generate a PWM by means of the switch which is designed for generating PWM in order to ease the transition between individual voltage levels.

## Revendications

1. Procédé de fonctionnement d'un système de stockage modulaire formant batterie qui comprend un groupe de n modules de stockage d'énergie rechargeables,
• chacun des n modules de stockage d'énergie étant associé à un commutateur permettant d'activer et de désactiver le module de stockage d'énergie respectif, et
• les n modules de stockage d'énergie pouvant être câblés les uns avec les autres par le biais des commutateurs de telle sorte que les tensions individuelles U_{individuelle} des modules de stockage d'énergie activés puissent s'ajouter pour obtenir une tension totale Uₜₒₜₐₗₑ, et
• le groupe de n modules de stockage d'énergie comprenant des modules de stockage d'énergie de différents types,
et le procédé comprenant les étapes suivantes :
a. au moins une valeur de puissance est déterminée pour chacun des n modules de stockage d'énergie,
b. une tension totale Uₜₒₜₐₗₑ(t) variable dans le temps est générée par activation d'au moins deux modules de stockage d'énergie du groupe de manière temporellement superposée mais sur des périodes d'activation de durées différentes, et
c. en fonction de l'au moins une valeur de puissance déterminée, l'une des périodes d'activation de durées différentes est associée à chacun des au moins deux modules de stockage d'énergie.

2. Procédé selon la revendication 1 comprenant les étapes supplémentaires suivantes :
a. les valeurs de puissance déterminées pour chacun des n modules de stockage d'énergie sont stockées dans une mémoire de données de sorte que les n modules de stockage d'énergie puissent être triés en fonction de leurs performances.
b. l'association des modules de stockage d'énergie à des périodes d'activation de durées différentes est effectuée sur la base des valeurs de puissance stockées dans la mémoire de données.
c. les modules de stockage d'énergie de puissance relativement élevée sont associés à des périodes d'activation plus longues que les modules de stockage d'énergie de puissance relativement faible.

3. Procédé selon la revendication 1 ou la revendication 2 comprenant les étapes supplémentaires suivantes :
a. on détermine le nombre m de modules de stockage d'énergie nécessaires pour générer une tension de crête de Uₜₒₜₐₗₑ(t).
b. les m modules de stockage d'énergie sont sélectionnés parmi les n modules de stockage d'énergie disponibles.
c. pour générer un profil de tension souhaité de Uₜₒₜₐₗₑ(t), on détermine les intervalles de temps et la période d'activation durant lesquels les m modules de stockage d'énergie doivent être activés.
d. les m modules de stockage d'énergie sélectionnés sont mis, avec prise en compte des critères de tri « puissance » et « durée des périodes d'activation qui leur sont associées », dans un ordre dans lequel les deux critères de tri augmentent ou diminuent tous les deux dans le même sens.
e. les m modules de stockage d'énergie sont activés dans cet ordre et aux intervalles de temps spécifiés.

4. Procédé selon la revendication 3 comprenant l'une au moins des caractéristiques supplémentaires et/ou étapes supplémentaires suivantes :
a. la courbe de tension souhaitée est sinusoïdale.
b. le module de stockage d'énergie ayant la puissance la plus élevée est activé en premier et celui ayant la puissance la plus faible est activé en dernier.
c. le module de stockage d'énergie ayant la puissance la plus élevée est activé sur la période d'activation la plus longue et le module de stockage d'énergie ayant la puissance la plus faible est activé sur la période d'activation la plus courte.

5. Procédé selon la revendication 4 comprenant l'une au moins des caractéristiques supplémentaires suivantes :
a. les modules de stockage d'énergie de différents types ont de préférence des tensions individuelles différentes U_{individuelle}.
b. les modules de stockage d'énergie de différents types comprennent de préférence au moins un module de stockage d'énergie qui est un condensateur.
c. les modules de stockage d'énergie de types différents comprennent de préférence au moins deux modules de stockage d'énergie de tensions nominales différentes qui sont chacun un condensateur.
d. les modules de stockage d'énergie de différents types comprennent de préférence au moins un module de stockage d'énergie qui stocke l'énergie électrique sur une base électrochimique.
e. les modules de stockage d'énergie de types différents comprennent de préférence au moins deux modules de stockage d'énergie qui stockent l'énergie électrique sur une base électrochimique et qui diffèrent l'un de l'autre par leur tension nominale.
f. les modules de stockage d'énergie de différents types comprennent de préférence au moins un module de stockage d'énergie qui est un condensateur et au moins un module de stockage d'énergie qui stocke l'énergie électrique sur une base électrochimique, l'au moins un condensateur et l'au moins un module de stockage d'énergie qui stocke l'énergie électrique sur une base électrochimique ayant des tensions nominales différentes.
g. les modules de stockage d'énergie de différents types comprennent de préférence un module de stockage d'énergie du groupe comprenant un module de stockage d'énergie de type à ion lithium, un module de stockage d'énergie de type à nickel-hydrure métallique et un module de stockage d'énergie de type Pb/PbO₂.
h. les modules de stockage d'énergie de types différents comprennent de préférence au moins deux modules de stockage d'énergie du groupe comprenant des modules de stockage d'énergie de type à ion lithium, des modules de stockage d'énergie de type nickel-hydrure métallique et des modules de stockage d'énergie de type Pb/PbO₂.
i. les modules de stockage d'énergie de différents types comprennent au moins un module de stockage d'énergie du groupe comprenant un module de stockage d'énergie ayant une cathode à base de LFP, un module de stockage d'énergie ayant une cathode à base de NMC, un module de stockage d'énergie ayant une cathode à base de LTO et un module de stockage d'énergie ayant une cathode à base de NCA.

6. Procédé selon l'une des revendications précédentes comportant l'une au moins des caractéristiques supplémentaires et/ou étapes supplémentaires suivantes :
a. l'un des commutateurs associés aux n modules de stockage d'énergie est conçu pour pouvoir générer une modulation par ondes pulsées (PWM).
b. le module de stockage d'énergie auquel ce commutateur est associé est un condensateur.
c. lors de l'activation et/ou de la désactivation des modules de stockage d'énergie, une modulation PWM est générée au moyen du commutateur conçu pour générer une modulation PWM afin d'amortir la transition entre des niveaux de tension individuels.

7. Procédé selon l'une des revendications précédentes comportant l'une au moins des caractéristiques supplémentaires et/ou étapes supplémentaires suivantes :
a. une valeur seuil de puissance est définie pour chacun des n modules de stockage d'énergie, au-dessous de laquelle un module de stockage d'énergie est désactivé.
b. si la valeur de puissance tombe au-dessous de la valeur seuil, un signal ou un message est déclenché qui indique la désactivation.
c. le module de stockage d'énergie désactivé est ponté de façon à ne plus être relié électriquement à d'autres modules de stockage d'énergie.
d. le module de stockage d'énergie désactivé est remplacé.

8. Système de stockage modulaire formant batterie qui comprend un groupe de n modules de stockage d'énergie rechargeables et qui comporte les caractéristiques suivantes :
a. le groupe de n modules de stockage d'énergie comprend des modules de stockage d'énergie de différents types.
b. le système de stockage formant batterie comprend un système de gestion de batterie.
c. le système de gestion de batterie comprend pour chacun des n modules de stockage d'énergie un commutateur qui permet d'activer et de désactiver le module de stockage d'énergie respectif,
d. les commutateurs sont conçus et reliés les uns aux autres de telle sorte que les tensions individuelles U_{individuelle} des modules de stockage d'énergie activés puissent s'additionner pour obtenir une tension totale Uₜₒₜₐₗₑ,
e. le système de gestion de batterie comprend un dispositif de test qui permet de déterminer pour chacun des n modules de stockage d'énergie au moins une valeur de puissance qui est caractéristique de sa puissance,
f. le système de gestion de batterie comprend un dispositif de commande qui permet d'activer au moins deux des modules de stockage d'énergie du groupe par le biais des commutateurs respectivement associés de manière temporellement superposée mais sur des périodes d'activation de durées différentes afin de générer une tension totale Uₜₒₜₐₗₑ(t) qui varie dans le temps, et
g. le dispositif de commande est conçu pour associer l'une des périodes d'activation de durées différentes à chacun des au moins deux modules de stockage d'énergie en fonction de l'au moins une valeur de puissance déterminée.

9. Système de stockage formant batterie selon la revendication 8 comportant l'une au moins des caractéristiques supplémentaires suivantes :
a. les modules de stockage d'énergie de différents types ont des tensions individuelles différentes U_{individuelle}.
b. les modules de stockage d'énergie de différents types comprennent au moins un module de stockage d'énergie qui est un condensateur.
c. les modules de stockage d'énergie de différents types comprennent au moins deux modules de stockage d'énergie de tensions nominales différentes qui sont chacun un condensateur.
d. les modules de stockage d'énergie de différents types comprennent au moins un module de stockage d'énergie qui stocke l'énergie électrique sur une base électrochimique.
e. les modules de stockage d'énergie de différents types comprennent au moins deux modules de stockage d'énergie qui stockent l'énergie électrique sur une base électrochimique et qui diffèrent l'un de l'autre par leur tension nominale.
f. les modules de stockage d'énergie de différents types comprennent au moins un module de stockage d'énergie qui est un condensateur et au moins un module de stockage d'énergie qui stocke l'énergie électrique sur une base électrochimique, l'au moins un condensateur et l'au moins un module de stockage d'énergie qui stocke l'énergie électrique sur une base électrochimique ayant des tensions nominales différentes.
g. les modules de stockage d'énergie de différents types comprennent des modules de stockage d'énergie du groupe comprenant des modules de stockage d'énergie de type à ions lithium, des modules de stockage d'énergie de type nickel-hydrure métallique et des modules de stockage d'énergie de type Pb/PbO₂.
h. les modules de stockage d'énergie de différents types comprennent au moins deux modules de stockage d'énergie du groupe comprenant des modules de stockage d'énergie de type à ion lithium, des modules de stockage d'énergie de type nickel-hydrure métallique et des modules de stockage d'énergie de type Pb/PbO₂.
i. les modules de stockage d'énergie de différents types comprennent au moins un module de stockage d'énergie du groupe comprenant un module de stockage d'énergie ayant une cathode à base de LFP, un module de stockage d'énergie ayant une cathode à base de NMC, un module de stockage d'énergie ayant une cathode à base de LTO et un module de stockage d'énergie ayant une cathode à base de NCA.

10. Système de stockage formant batterie selon l'une des revendications 8 ou 9 comportant l'une au moins des caractéristiques supplémentaires suivantes :
a. il comprend une mémoire de données dans laquelle peuvent être stockées les valeurs de puissance déterminées pour chacun des n modules de stockage d'énergie de sorte que les n modules de stockage d'énergie puissent être triés en fonction de leur puissance.
b. le dispositif de commande est conçu pour associer les modules de stockage d'énergie à des périodes d'activation de durées différentes sur la base des valeurs de puissance stockées dans la mémoire de données.

11. Système de stockage formant batterie selon l'une des revendications 8 à 10 comportant l'une au moins des caractéristiques supplémentaires suivantes :
a. le dispositif de commande est conçu pour déterminer automatiquement le nombre m de modules de stockage d'énergie nécessaires pour générer une tension de crête de Uₜₒₜₐₗₑ(t).
b. le dispositif de commande est conçu pour sélectionner automatiquement les m modules de stockage d'énergie parmi les n modules de stockage d'énergie disponibles.
c. le système de gestion de batterie comprend une mémoire de données dans laquelle peuvent être stockés les intervalles de temps et la période d'activation durant lesquels les m modules de stockage d'énergie doivent être activés.
d. le dispositif de commande est conçu pour mettre automatiquement les m modules de stockage d'énergie sélectionnés, en effectuant un tri selon les critères de tri « puissance » et « durée des périodes d'activation qui leur sont associées », dans un ordre dans lequel les deux critères de tri augmentent ou diminuent tous les deux dans le même sens.
e. le dispositif de commande est conçu pour activer les m modules de stockage d'énergie dans cet ordre et à des intervalles de temps spécifiés.

12. Système de stockage formant batterie selon l'une des revendications 8 à 11 comportant l'une au moins des caractéristiques supplémentaires suivantes :
a. l'un des commutateurs associés aux n modules de stockage d'énergie est conçu pour pouvoir générer une modulation par ondes pulsées (PWM).
b. le module de stockage d'énergie auquel ce commutateur est associé est un condensateur.
c. le dispositif de commande est conçu pour générer une modulation PWM lors de l'activation et/ou de la désactivation des modules de stockage d'énergie au moyen du commutateur conçu pour générer la modulation PWM afin d'amortir la transition entre des niveaux de tension individuels.
